# EUROPEAN PATENT APPLICATION

(11) **EP 3 772 572 A1**
(43) Date of publication of application: **10.02.2021**
(21) Application number: 19190034.9
(22) Date of filing: 05.08.2019
(51) Int. Cl.: F01D 25/28, F01D 5/06, G01B 5/00

(54) **DEVICE FOR RESTRAINING AN ELEMENT OF A COUPLING TO ANOTHER ELEMENT OF THE COUPLING IN A STRAIGHT-BUILD ASSEMBLY FOR A MODULE OF A GAS TURBINE ENGINE**

(71) Applicant: Rolls-Royce Deutschland Ltd & Co KG, 15827 Blankenfelde-Mahlow (DE); Rolls-Royce plc, London N1 9FX (GB)
(72) Inventor: ADATIA, Adil A., Derby, Derbyshire DE24 8BJ (GB); BERTRAM, Alexandra J., Derby, Derbyshire DE24 8BJ (GB); HARTWIG, Lennard, 15827 Blankenfelde-Mahlow (DE); JANES-BERRY, Richard S. H., Derby, Derbyshire DE24 8BJ (GB); WILLIS, David M., Derby, Derbyshire DE24 8BJ (GB)
(74) Representative: Müller, Wolfram Hubertus

(57) **Abstract**

The invention regards a device for restraining an element of a coupling to another element of the coupling in a straight-build assembly for a module of a gas turbine engine, The device comprises a rotary table (1), a master coupling element (2) connected to the rotary table, and a pull-down tool configured to restrain a component coupling element (3) arranged above the master coupling element (2) to the master coupling element (2) by providing a restraining force. It is provided that the pull-down tool comprises an upper body (4), a lower base (5) connected to the rotary table (1) and/or the master coupling element (2), a centre spindle (6) which, by axial movement, moves the upper body (4) relative to the lower base (5), and a restraining mechanism (7) activated by axial movement of the centre spindle (6), wherein the restraining mechanism (7) comprises extendable and retractable clamping jaws (71) that are extended in the radial direction when the upper body (4) is lowered towards the lower base (5), wherein the jaws (71) upon axial down movement of the centre spindle (6) are both extended in the radial direction and lowered towards the component coupling element (3).

## Description

The present disclosure relates to a device for restraining an element of a coupling to another element of the coupling in a straight-build assembly for a module of a gas turbine engine.

It is known to assemble a module of a gas turbine engine such as a high-pressure compressor module in a straight-build assembly. In a straight-build assembly, components of a module such as rotor discs are joined together such that a straight centre line between the centres of the components is realized. Straight-build assembly is achieved by minimizing eccentricity error stage-by-stage in the assembly, thus minimizing the variation in distance of the centres of masses from the centre line.

In a compressor module, several rotor discs are typically joined by curvic couplings which comprise teeth having a characteristic curved shape on the faces of two mating flanges. During the straight-build assembly, the rotor discs are placed on a rotary air table for swash and runout measurement. One problem occurring in this respect is to restrain a component curvic coupling element of a rotor disc to a tooling master curvic coupling element fixed to the rotary air table. The restraining is to ensure that the teeth of the component curvic coupling element and of the tooling master curvic coupling element have perfectly matched, thereby forming a completely flat surface connection. If this was not the case, the measurements of swash and runout would be affected by the level of misalignment of the two components. This would negatively affect the positioning of the next component in the assembly and, therefore, the overall balancing of the engine.

It is known to connect a component curvic coupling element to a master curvic coupling element by means of a plurality of bolts. However, it is time consuming to assemble, tighten and disassemble the bolts. Further, such a process is open to sources of variation and has poor repeatability of measurements since it is difficult to ensure that each bolt is tightened to the same value.

Similar problems can occur in the straight-build assembly of another module of a gas turbine engine such as a turbine module.

The problem underlying the present invention is to provide for a device that allows to restrain an element of a coupling to another element of the coupling in a straight-build assembly for a module of a gas turbine engine in a fast and exact manner.

This problem is solved by a device with the features of claim 1. Embodiments of the invention are identified in the dependent claims.

According to an aspect of the invention, a device for restraining a component of a coupling to another component of the coupling in a mounting assembly for a module of a gas turbine engine is provided, wherein the device comprises a rotary table having an axis of rotation that defines an axial direction, a master coupling element connected to the rotary table, and a pull-down tool configured to restrain a component coupling element arranged above the master coupling element to the master coupling element by providing a restraining force.

It is further provided that the pull-down tool comprises an upper body, a lower base connected to the rotary table and/or the master coupling element, a centre spindle which, by axial movement, moves the upper body relative to the lower base, and a restraining mechanism activated by axial movement of the centre spindle. The restraining mechanism comprises extendable and retractable clamping jaws attached to the upper body that are extended in the radial direction when the upper body is lowered towards the lower base upon axial down movement of the centre spindle. Upon axial down movement of the centre spindle and upper body the jaws are both extended in the radial direction and lowered towards the component coupling element in order to restrain the component coupling element to the master coupling element.

Accordingly, aspects of the present invention are based on the idea to provide for a load applying centre spindle which distributes a restraining force evenly through a set of retractable jaws that are activated and put into place automatically when the upper body moves towards the lower base by axial movement of the centre spindle. This way, a compact and accurate device is provided for that allows to apply and distribute evenly a restraining force across a component coupling element that is to be restrained to a master coupling element which is connected to the rotary table. By the even distribution of load, accurate swash and runout measurements during the straight-build assembly can be achieved. Further, by avoiding the use of individual bolts and using retractable jaws that are positioned automatically instead, the assembly process can be sped up.

According to an embodiment, the restraining mechanism comprises positioning elements for moving the jaws in the radial direction, wherein the positioning elements are arranged obliquely in an inner space between the upper body and the lower base. The positioning elements are arranged increasingly in a horizontal direction when the upper body is lowered towards the lower base, thereby moving the jaws in the radial direction.

According to an embodiment, each jaw is moved by an associated positioning element. In particular, it may be provided that an outer end of the positioning element is pivotably connected to and/or rests against a projection of a respective jaw. An inner end of the positioning element is pivotably connected to the lower base. By moving the positioning element in a more horizontal direction the jaw is automatically moved in the radial direction.

It can be provided for that the positioning elements are also configured to retract the jaws when the upper body is lifted with respect to the lower base such that both extension and retraction of the jaws takes place automatically when the upper body is moved relative to the lower base. This can be achieved in that the outer ends of the positioning elements are pivotally connected to the jaws. However, in principle, a separate mechanism could be provided for to retract the jaws when the upper body is lifted relative to the lower base, such separate mechanism, e.g., comprising spring elements.

According to an embodiment, the positioning elements are formed by rods or levers.

According to a further embodiment, the tips of the jaws, when being moved from the retracted position to the extended position, follow a parabolic trajectory. Thereby, the tips of the jaws come down towards the component coupling element or a protective cover on top of the component coupling element in a parabolic trajectory. Such parabolic trajectory comprises a radial movement which, however, is negligible at the end of the movement when the jaws come into contact with the component coupling element or protective cover.

It may be provided that the jaws are slidably connected by means of T-slot cut-outs to the upper body. This serves to guide the jaws in the upper body in a defined manner with little play.

According to another embodiment, an indicator arrangement indicating visually when all the jaws are in the retracted position is provided for. Such visual indication allows to safely determine when it is safe to remove the component (e.g., a rotary disc such as a BLISK) from the rotary table.

In an exemplary design, the indicator arrangement comprises an indicator ring attached to a central part of the upper body, wherein the indicator ring contains conductive springs which are arranged next to each other in the circumferential direction of the ring. The conductive springs are not in an electrical contact when the jaws are extended. However, the conductive springs are brought into electrical contact or are electrically connected by the jaws when the jaws are retracted. When the conductive springs are in electrical contact an electric circuit is closed that provides for an optical signal that the jaws are in the retracted position. The conductive springs may be brought into electrical contact in that they are bent towards each other by the retracted jaws or may be brought into electrical contact by a conductive tape located on the back of the jaws that connects the respective conductive springs.

According to a further embodiment, a protective cover is provided that is be placed on top of the component coupling element, wherein the extended jaws exert a force on the protective cover. The protective cover creates a flat surface to clamp on. In an embodiment, the protective cover consists of a ring or several ring segments located on top of bolts and/or dowels that protrude upwards from the top of the component coupling element, thereby creating a flat surface. In addition, it can be provided for that the protective cover comprises a compressible nylon cover on the top side providing for equal load distribution, and/or that the protective cover is coated on the underside that faces the master coupling element to prevent metal to metal contact.

The centre spindle is adapted to convert a rotational movement to an axial movement. To this end, according to an embodiment, the centre spindle comprises an external thread that interacts with an internal thread provided in the lower base, wherein the internal thread takes the load transmitted from the centre spindle to the lower base.

More particularly, in an embodiment, the lower base forms a central hollow cylindrical shaft, wherein the inside of the hollow cylindrical shaft guides the centre spindle and forms the internal thread. The outside of the hollow cylindrical shaft guides the upward and downward movement of the upper body relative to the lower base. In this respect, the upper body also forms a hollow cylindrical shaft, the inside of which fits against and is guided by the outside of the hollow cylindrical shaft of the lower base.

In an embodiment, the upper body comprises a web which supports the spindle and fixes it axially with respect to the upper body. This ensures that by axial movement of the spindle (caused by the thread that converts a rotational movement of the spindle into an axial movement) the upper body is moved relative to the lower base.

According to a further embodiment, a compression spring is provided that exerts a force on the upper body in the upward direction. Such compression spring is supported in the lower base and contacts, e.g., the face of the mentioned hollow cylindrical shaft formed by the upper body.

According to a further embodiment, the upper body comprises a protective coating preventing metal to metal contact with the lower base.

In embodiments, the master coupling element and the component coupling element are curvic coupling elements each comprising curvic coupling teeth on the surfaces of the coupling elements facing each other. However, in principle, any coupling between the components of the coupling can be provided for. Another example for a face to face coupling is the Hirth coupling.

The component curvic coupling element is ring-shaped and connected to or forms part of a disc such as a rotor disc. Such rotor disc may be in the form of a BLISK (BLISK = "Blade Integrated Disk").

It should be noted that the present invention is described in terms of a cylindrical coordinate system having the coordinates x, r and ϕ. Here x indicates the axial direction, r the radial direction and ϕ the angle in the circumferential direction. The axial direction is defined by the rotational axis of the rotary table which corresponds to the machine axis of the gas turbine engine once assembled. Starting from the x-axis, the radial direction points radially outwards. Terms such as "in front of" and "behind" or "upper" and "lower" refer to the axial direction. Terms such as "outer" or "inner" refer to the radial direction.

The invention will be explained in more detail on the basis of exemplary embodiments with reference to the accompanying drawings in which:
- Fig. 1: is a cross-sectional view of an embodiment of a device for restraining a component curvic coupling element to a master curvic coupling element, the device comprising an upper body, a lower base, a centre spindle and a restraining mechanism activated by axial movement of the centre spindle, the restraining mechanism comprising clamping jaws and rods for extending and retracting the clamping jaws;
- Fig. 2: is a perspective view oblique from below showing the clamping jaws and the rods of the restraining mechanism of Fig. 1 in the extended position, and further showing an indicator ring connected to a central shaft for visually indicating when all clamping jaws are in the retracted position;
- Fig. 3: is a view from below showing the clamping jaws and the rods of the restraining mechanism of Fig. 1 in the retracted position and further showing the indicator ring of Fig. 2;
- Fig. 4: is a perspective view of the indicator ring of Figs. 2 and 3, the indicator ring comprising conductive springs;
- Fig. 5: is a cross-sectional view of the device of Fig. 1, wherein the upper body and centre spindle are in an upper position and the clamping jaws are in a retracted position;
- Fig. 6: is a cross-sectional view of the device of Fig. 1, wherein the upper body and centre spindle are in a middle position and the clamping jaws are in a partly extended position; and
- Fig. 7: is a cross-sectional view of the device of Fig. 1, wherein the upper body and centre spindle are in a lower position and the clamping jaws are in a fully extended position.

The present invention is to be understood before the background of straight-build assembly of a gas turbine engine or a module thereof. The straight-build method is a process of aligning components of the module to oppose variations in concentricity and swash such that the centre line of the module is kept as straight as possible, thus minimizing the variation in distance of the centres of masses from the centre line. This in turn minimizes the out of balance of the assembly.

The straight build method includes the process of placing components or assemblies on a rotary air table and rotating them about the table axis while taking measurements to determine the eccentricity and swash errors of the components. The measurements are used to determine the ideal orientation of the next component in the assembly. Measurements are taken throughout the assembly and are repeated to validate the results. This process ensures the centre line through the assembly is kept as straight as possible.

More particularly, when assembling a module such as a high-pressure module of a gas turbine engine, the components are joined together in stages. During assembly, the components are lifted onto the rotary air table for measurements and to validate the joint integrity. A master curvic coupling component is connected to the rotary air table. A component curvic coupling element is attached to a rotor disc such as a high-pressure BLISK or formed by the rotor disc. The assembly is set on the master curvic coupling element for runout and swash measurements, wherein the component curvic coupling element is to be restrained to the master curvic coupling element to assure that the teeth of the two components have perfectly matched, thereby forming a completely flat surface connection. To this end, a device for restraining a component curvic coupling element to a master curvic coupling element is provided for.

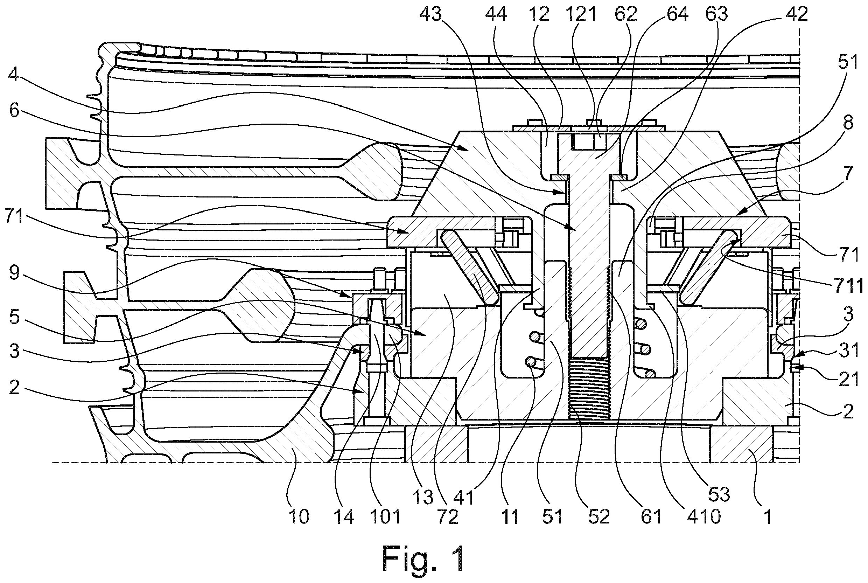

Fig. 1 shows an embodiment of such device. The device comprises a rotary air table 1 which has an axis of rotation that defines an axial direction. A master curvic coupling element 2 is connected to the rotary table 1, e.g., by a plurality of bolts (not shown). Further, a lower base 5 of a pull-down tool is connected to the rotary table 1 such that the rotary table 1, the master curvic coupling element 2 and the lower base 5 together form a fixed basis of the device.

The pull-down tool further comprises an upper body 4 which can be moved in an axial direction towards and away from the lower base 5. Movement of the upper body 4 relative to the lower base 5 is caused by a centre spindle 6 which is arranged along the axis of rotation of the rotary table 1. The centre spindle 6 comprises an external thread 61 that runs in an internal thread 52 of the lower base 5. More particularly, the lower base 5 forms a hollow cylindrical inner shaft 51 which is arranged symmetrically with respect to the rotary axis of the tool. The inner shaft 51 forms the internal thread 52 of the lower base 5. The outside of the inner shaft 51 fits against the inner surface of a hollow cylindrical outer shaft 41 formed by the upper body 4. Thereby, a guiding between the lower base 5 and the upper body 4 is provided guiding a movement of these two parts.

The upper body 4 further forms a web 42 around an opening 43 through which the spindle shaft extends. The web 42 supports the spindle 6 and fixes the spindle 6 axially with respect to the upper body, wherein a flange 63 of the spindle 6 rests against the web 42.

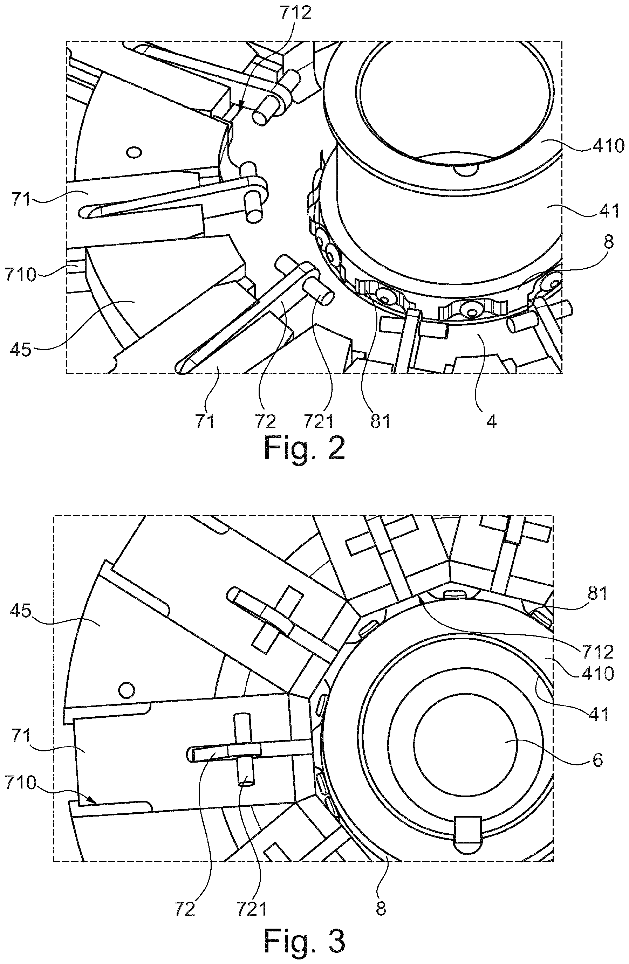

There is further provided an indicator ring 8 that runs around the outside of outer shaft 41 in the upper part of outer shaft 41. The indicator ring 8 forms part of an indicator arrangement indicating visually when all clamping jaws 71 are in the retracted position, as will be explained in more detail with respect to Figs. 2 to 4.

The spindle 6 comprises a head 64 which is located in an upper recess 44 in the upper body 4. The recess 44 is closed by a guard plate 12 that prevents foreign object damage from entering the mechanism. The spindle head 64 is formed as a hex head having a hex recess 62 into which a torque wrench can be inserted through an opening in the guard plate 12. By rotating the spindle 6, the spindle 6 is moved axially by external thread 61 and internal thread 52.

In the position shown in Fig. 1, the upper body 4 is at an axial distance from the lower base 5, such that there is a free inner space 13 between the lower base 5 and the upper body 4 radially outward of the outer shaft 42.

The pull-down tool further comprises clamping jaws 71 which can be extended in the radial direction and retracted back. The clamping jaws 71 are slidably connected to the upper body 4 in a manner further discussed with respect to Figs. 2 and 3. A positioning element formed by a rod 71 extends in the inner space 13 between the lower base 5 and the upper body 4. Each clamping jaw 71 is associated with and moved by one corresponding rod 72. One end of the rod 72 is pivotably connected to a clamping jaw 71 and the other end of the rod 72 is pivotably connected to the lower base 5. At the same time, the rod 72 is arranged obliquely in inner space 13. Thereby, if the upper body 4 is lowered towards lower base 5, automatically the rods 72 are arranged increasingly in a horizontal direction, thereby pushing the jaws 72 in the radial direction and, accordingly, away from outer shaft 41. To this end, one end of the rod 72 may rest in against a projection 711 of the respective jaw 71.

In embodiments, there may be provided between 8 and 20 clamping jaws 71 and respective rods 72.

A compression spring 11 exerts a force on the upper body 4 in the upward direction. One end of compression spring 11 rests against the lower base 5. The other end of compression spring 11 rests against the front face of the outer shaft 41. The front face of the outer shaft 41 forms a lip 410 that extend radially outward. Lip 410 increases the surface of the front face of outer shaft 41 against which the compression spring 11 can rest. Further, lip 410, in connection with a mid cover plate 53, provides for a physical stop that stops upward movement of the upper body 4. Mid cover plate 53 is arranged in the inner space 13 between the lower base 5 and the upper body 4. Besides providing a stop for the lip 410, the mid cover plate 53 secures the lower end of rods 72 in place in the lower base 5.

The ring shaped master curvic coupling element 2 comprises, on its upper face 21, curvic coupling teeth. A component curvic coupling element 3 is placed on the master curvic coupling element 2. The component curvic coupling element also comprises curvic coupling teeth located on its lower face 31 facing the upper face 21 of the master curvic coupling element 2. A perfect match between the respective curvic coupling elements is to be provided to form a completely flat surface connection between the master curvic coupling element 2 and the component curvic coupling element 3. This allows to make exact runout and swash measurements by rotating the rotary air table 1.

The component curvic coupling element 3 is formed by or connected to an inner rim 101 of a rotor disc 10. In the depicted example, the component curvic coupling element 3 is connected to a first stage BLISK 10. Curvic couplings are known to the person skilled in the art such that a detailed discussion of such couplings is refrained from.

Connection between the inner rim 101 of rotor disc 10 and the component curvic coupling element 3 can be provided for by means of bolts and/or dowels 14 that protrude from the inner rim 101. A protective cover 9 is provided that is placed on top of the component curvic coupling element 3 or, more exactly, on top of the inner rim 101 of rotor disc 10. However, for the purposes of this disclosure inner rim 101 and the component curvic coupling element 3 are considered as one part.

The protective cover 9 is formed by a ring that goes over the bolts and/or dowels 14 protruding from the inner rim 101. The protective cover 9 may be formed as a full ring or by several ring segments such as two halves of a ring. By means of the protective cover 9, a flat top surface is created on which the clamping jaws 71 exert a clamping force when in the extended position as will be discussed below.

In an example embodiment, the protective cover 9 comprises a compressive nylon cover on its top side to ensure equal load distribution. Further, the protective cover 9 may have a coating on its underside to prevent metal to metal contact.

Figs. 2 and 3 show in views from below in more detail the restraining mechanism for restraining the component curvic coupling element 3 to the master curvic coupling element 2, the restraining mechanism comprising the clamping jaws 71 and the rods 72. Figures 2 to 4 further show in more detail the indicator ring 8. Figures 2 to 4 are referred to at the same time in the following.

The clamping jaws 71 are slidably located in the upper body 4. The clamping jaws 71 generally have a rectangular shape. To allow movement in the radial direction, T-slot cut-outs 710 are provided along the sides of the clamping jaws 71, into which elongated projections of intermediate blocks 45 of the upper body 4 extend. The rods 72 are pivotally connected at one end to a respective clamping jaw 71 and at the other end to the lower base (not shown in Figs. 2 and 3). The ends of the rods 72 to this end comprise pins 271 protruding at right angles from rod 72, wherein the pins 271 of the end connected to the lower base 5 are shown and the respective pins of the end connected to the clamping jaws 71 are not shown and located inside the clamping jaws 71.

Figures 2 and 3 also show in a perspective view and from below the outer shaft 41 of the upper body and the lip 410 formed at the lower end of the outer shaft 41.

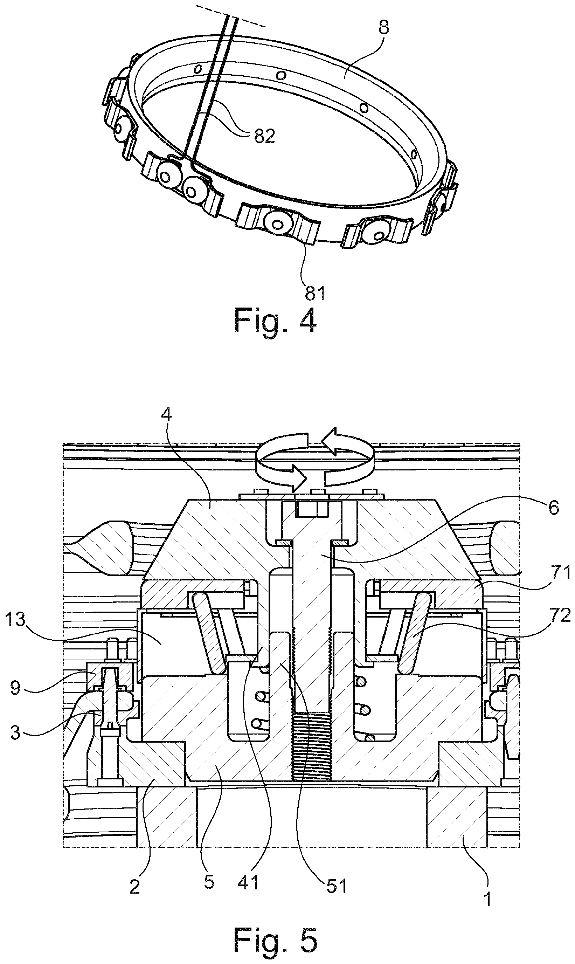

There is further provided an indicator ring 8 which is part of an indicator arrangement that further comprises, as shown in Fig. 4, conductive springs 81 connected to the outside of the indicator ring 8, electrical cables 82 providing for an electric circuit and a battery and an optical signal device such as an LED (not shown). The indicator ring 8 is made of a non-conductive material such as a polymer. The conductive flat springs 81 are arranged spaced to each other in the circumferential direction of the ring 8. When the clamping jaws 71 are in the extended position shown in Fig. 2, there is no electrical connection between the conductive springs 81. When the clamping jaws 71 are in the retracted position shown in Fig. 3, the conductive springs 81 are electrically connected by means of a conductive tape 712 or the like attached to the back side of the clamping jaws 71. With the conductive springs 81 being in electrical contact, the electrical circuit is closed and an optical signal is generated that indicates that the jaws are in the retracted position. This information is important as it indicates when the rotary disc 10 may be removed from the master curvic coupling element 2 and the rotary table 1.

Operation of the pull-down tool is explained with respect to Figs. 5 to 7. Generally, the lower base 5 centralizes the pull-down tool with respect to the centre axis of the rotary table 1 and, by means of internal thread 52, takes the load transmitted from the spindle 6 to the lower base 5. The inner shaft 51 of the lower base 5, in cooperation with the outer shaft 41 of the upper body 4, guides the up and down movement of the upper body 4. The upper body 4, which may also be referred to as an umbrella assembly, houses the clamping jaws 71 and transmits a downward force from the centre spindle 6 to the clamping jaws 71.

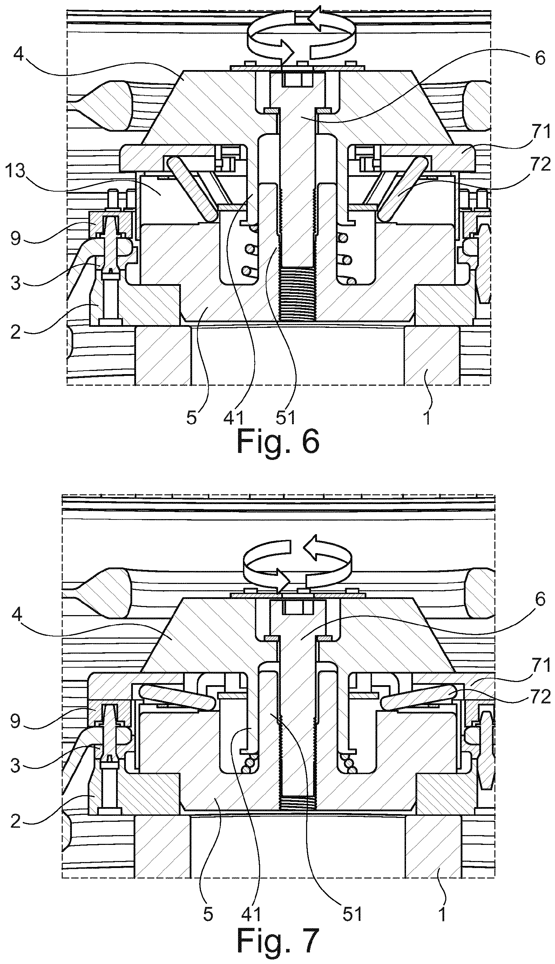

In Fig. 5, the upper body 4 is in the uppermost opposition. In Fig. 6, the upper body 4 is in a middle position. In Fig. 7, the upper body 4 is in the lowermost position. Axial movement of the upper body 4 is effected by the centre spindle 6 which, when rotated, moves axially and thereby moves the upper body 4 relative to the lower base 5. For rotation of the spindle 6, an operator uses a torque wrench attached to the hex recess 62 in head 63 of the spindle 6. Upon rotation of the spindle 6, the spindle 6 screws into the lower base 5 and lowers the upper body 4.

When the upper body 4 is lowered, automatically the rods 72 that are arranged obliquely push the clamping jaws 71 radially outwards. Such radial movement takes place automatically as the rods 72, when being moved in a more horizontal position, extend more in the radial direction, thereby pushing the clamping jaws 71 outwards. Fig. 6 shows a position in which the clamping jaws 71 are partially extended in the radial direction.

It is pointed out that the clamping jaws 71 realize two movements when the upper body 4 is lowered. The first movement is the radial movement. The second movement is an axial movement caused by the fact that the clamping jaws 71 are connected to the upper body 4 such that, when the upper body 4 is lowered, the clamping jaws 71 are lowered as well. These two movements together lead to a parabolic trajectory that the tips of the jaws 71 follow when the upper body 4 is lowered. In the course of this trajectory, the tips of the clamping jaws 71 come down to the protective cover 9, wherein there is a negligible radial movement only after the clamping jaws have reached contact with the protective cover 9. Once the clamping jaws 71 touched down on the protective cover 9, a clamping force is provided that restrains the component curvic coupling element 3 to the master curvic coupling element 2. By further torqueing the centre spindle 6 further clamping force can be applied.

In embodiments, an up to a 5 tons restraining force can be provided for by the pull-down tool and restraining mechanism. By using a plurality of clamping jaws 71 and a protective cover 9 the clamping force is evenly distributed across the circumference of the component curvic coupling element 3.

After the connection between the component curvic coupling element 3 and the master curvic coupling element 2 has been established, runout and mesh measurements can be run.

To disassemble the component curvic coupling element 3 and the master curvic coupling element 2 the spindle 6 is rotated in the opposing direction such that the upper body 4 is lifted with respect to the lower base 5. Thereby, the clamping jaws 71 are automatically retracted by means of the rods 72. When in the fully retracted position, an electric current is closed on indicator ring 8 which is signaled in that an LED turns on. Afterwards, the rotary disc 10 with inner rim 101 and the component curvic coupling element 3 can be removed.

It should be understood that the above description is intended for illustrative purposes only, and is not intended to limit the scope of the present disclosure in any way. Also, those skilled in the art will appreciate that other aspects of the disclosure can be obtained from a study of the drawings, the disclosure and the appended claims. All methods described herein can be performed in any suitable order unless otherwise indicated herein or otherwise clearly contradicted by context. Various features of the various embodiments disclosed herein can be combined in different combinations to create new embodiments within the scope of the present disclosure. In particular, the disclosure extends to and includes all combinations and sub-combinations of one or more features described herein. Any ranges given herein include any and all specific values within the range and any and all sub-ranges within the given range.

## Claims

1. Device for restraining an element of a coupling to another element of the coupling in a straight-build assembly for a module of a gas turbine engine, the device comprising:
- a rotary table (1) having an axis of rotation that defines an axial direction,
- a master coupling element (2) connected to the rotary table (1),
- a pull-down tool configured to restrain a component coupling element (3) arranged above the master coupling element (2) to the master coupling element (2) by providing a restraining force,
**characterized in that**
the pull-down tool comprises:
- an upper body (4),
- a lower base (5) connected to the rotary table (1) and/or the master coupling element (2),
- a centre spindle (6) which, by axial movement, moves the upper body (4) relative to the lower base (5),
- a restraining mechanism (7) activated by axial movement of the centre spindle (6), wherein the restraining mechanism (7) comprises extendable and retractable clamping jaws (71) attached to the upper body (4) that are extended in the radial direction when the upper body (4) is lowered towards the lower base (5) upon axial down movement of the centre spindle (6),
- wherein the jaws (71) upon axial down movement of the centre spindle (6) and upper body (4) are both extended in the radial direction and lowered towards the component coupling element (3) in order to restrain the component coupling element (3) to the master coupling element (2).

2. The device of claim 1, **characterized in that** the restraining mechanism (7) comprises positioning elements (72) for moving the jaws (71) in the radial direction, wherein the positioning elements (72) are arranged obliquely in an inner space (13) between the upper body (4) and the lower base (5), wherein the positioning elements (72) are arranged increasingly in a horizontal direction when the upper body (4) is lowered towards the lower base (5), thereby moving the jaws (71) in the radial direction.

3. The device of claim 2, **characterized in that** each jaw (71) is moved by an associated positioning element (72).

4. The device of claim 3, **characterized in that** in each case an outer end of the positioning element (72) is pivotably connected to and/or rests against a projection (711) of a respective jaw (71) and an inner end of the positioning element (72) is pivotably connected to the lower base (5).

5. The device of any of claims 2 to 4, **characterized in that** the positioning elements (72) are further configured to retract the jaws (71) when the upper body (4) is lifted with respect to the lower base (5).

6. The device of any of claims 2 to 5, **characterized in that** the positioning elements (72) are formed by rods.

7. The device of any of the preceding claims, **characterized in that** the tips of the jaws (71), when being moved from the retracted position to the extended position, follow a parabolic trajectory.

8. The device of any of the preceding claims, **characterized in that** the jaws (71) are slidably connected by T-slot cut-outs (710) to the upper body (4).

9. The device of any of the preceding claims, **characterized by** an indicator arrangement indicating visually when all the jaws (71) are in the retracted position.

10. The device of claim 9, **characterized in that** the indicator arrangement comprises an indicator ring (8) attached to a central part (41) of the upper body (4), wherein the indicator ring (8) contains conductive springs (81) which are arranged next to each other in the circumferential direction of the ring (8), wherein the conductive springs (81) are not in electrical contact when the jaws (71) are extended, wherein the conductive springs (81) are brought into electrical contact or are electrically connected by the jaws (71) when the jaws (71) are retracted, and wherein, when the conductive springs (81) are in electrical contact, an electric circuit is closed that provides for an optical signal that the jaws (71) are in the retracted position.

11. The device of any of the preceding claims, **characterized by** a protective cover (9) to be placed on top of the component coupling element (3), wherein the extended jaws (71) in the extended position exert a force on the protective cover (9).

12. The device of any of the preceding claims, **characterized in that** the centre spindle (6) is adapted to convert a rotational movement to an axial movement.

13. The device of any of the preceding claims, **characterized in that** the centre spindle (6) comprises an external thread (61) that interacts with an internal thread (52) provided in the lower base (5).

14. The device of claim 13, **characterized in that** the lower base (5) forms a central hollow cylindrical shaft (51), the inside of the hollow cylindrical shaft (51) guiding the centre spindle (6) and forming the internal thread (52), and the outside of the hollow cylindrical shaft (51) guiding an upward and downward movement of the upper body (4) relative to the lower base (5), wherein the upper body (4) also forms a hollow cylindrical shaft (41), the inside of which fits against and is guided by the outside of the hollow cylindrical shaft (51) of the lower base (5).

15. The device of any of the preceding claims, **characterized in that** the master coupling element (2) and the component coupling element (3) are curvic coupling elements each comprising teeth on the surfaces of the coupling elements (2, 3) facing each other.
